# FASCICULE DE BREVET EUROPEEN

(11) **EP 1 637 030 B1**
(45) Date de publication et mention de la délivrance du brevet: **07.05.2008**
(21) Numéro de dépôt: 05291755.6
(22) Date de dépôt: 18.08.2005
(51) Int. Cl.: A01D 75/18

(54) **Machine du genre faucheuse-débroussailleuse**
Grasmäher zum Gestrüpp-Ausreissen
Brush-cutting mower

(30) Priorité: 15.09.2004 FR 0409754
(43) Date de publication de la demande: 22.03.2006
(73) Titulaire: Noremat, 54710 Ludres (FR)
(72) Inventeur: Bayle, Christian, 69250 Neuville sur Saone (FR)
(74) Mandataire: Laget, Jean-Loup

(56) Documents cités:
- EP-A- 0 512 602
- FR-A- 2 779 903
- GB-A- 2 251 537
- US-A- 4 506 464

## Description

L'invention est relative à une machine du genre faucheuse-débroussailleuse, de type comportant un bâti supportant en rotation autour d'un axe horizontal un ensemble de bras formant compas.

On connaît des machines utilisées pour l'entretien des espaces verts et des accotements routiers. Ces machines sont généralement attelées à l'arrière d'un tracteur par l'intermédiaire d'un attelage trois points ou par intermédiaire d'une liaison fixe.

Des machines du genre faucheuse-débroussailleuse de type connu sont notamment fabriquées par la société NOREMAT de droit français et commercialisées notamment sous les dénominations MAGISTRA (marque déposée) et TONICA (marque déposée).

Un problème général des machines du genre faucheuse-débroussailleuse est de protéger l'ensemble de bras formant compas contre les risques d'endommagement au contact d'un obstacle.

A cet effet, dans les machines du genre faucheuse-débroussailleuse (cf. FR-A-2779903) dans lesquelles l'ensemble de bras formant compas est orienté par un vérin d'orientation poussant l'ensemble de bras vers l'avant en cours de travail, on peut prévoir que le vérin d'articulation est commandé par un distributeur muni d'un limiteur de pression. Lors du contact de l'ensemble de bras formant compas avec un obstacle, l'augmentation de pression subie par le vérin d'orientation agit sur le limiteur de pression présent dans le distributeur pour ouvrir le clapet de ce limiteur de pression et permettre le retour du fluide hydraulique au réservoir.

Le retour de l'huile hydraulique au réservoir permet alors un escamotage du bras et son recul vers l'arrière en limitant ainsi les conséquences du choc de l'ensemble de bras contre l'obstacle.

Dans les machines du genre faucheuse-débroussailleuse fabriquées par la société NOREMAT, on prévoit que le limiteur de pression intégré au distributeur de commande du vérin d'orientation soit taré à une pression d'ouverture de clapet prédéterminée, voisine de 15 MPa (150 bar).

La solution du limiteur de pression intégré au distributeur de commande du vérin d'orientation ne permet cependant pas une protection efficace de l'ensemble de bras lorsque l'ensemble de bras est replié.

En effet, lorsque l'ensemble de bras est étendu et que l'ouverture du compas formé est maximale, le couple résistant engendré par le contact de l'obstacle est maximal et le limiteur de pression se déclenche de manière à assurer une protection mécanique efficace de l'ensemble de bras.

Cependant, lorsque l'ensemble de bras est replié et que l'ouverture du compas est minimale, le couple résistant engendré par l'obstacle ne permet pas de déclencher le limiteur de pression et d'assurer une protection efficace du bras.

Un premier but de l'invention est d'assurer une protection efficace de l'ensemble de bras lorsque l'ensemble de bras est en position repliée correspondant à une faible ouverture du compas.

Un deuxième but de l'invention est d'assurer une protection efficace du bras en tenant compte de l'ouverture du compas formé par l'ensemble de bras.

L'invention a pour objet une machine du genre faucheuse-débroussailleuse telle que décrite dans la revendication 1.

Selon d'autres caractéristiques alternatives de l'invention :
- lorsque le distributeur de commande intègre un limiteur de pression, ledit circuit auxiliaire de limitation de pression comporte un limiteur de pression taré à une pression inférieure à la pression de tarage du limiteur de pression du distributeur de commande ;
- ledit circuit auxiliaire de limitation de pression comporte un distributeur auxiliaire commandé en fonction de l'ouverture angulaire du compas de l'ensemble de bras ;
- le distributeur auxiliaire est un distributeur électromagnétique commandé par un moyen fixé à l'ensemble de bras, pour mettre ou non en service le limiteur de pression du circuit auxiliaire ;
- le moyen fixé à l'ensemble de bras comporte un contacteur électrique formant interrupteur ;
- le moyen fixé à l'ensemble de bras comporte une came fixée à un premier bras et un poussoir fixé à un deuxième bras, dont la coopération assure la commande du distributeur auxiliaire ;
- la pression de tarage du limiteur de pression du circuit auxiliaire est voisine des deux tiers de la pression de tarage du distributeur de commande ;
- la pression de tarage du limiteur de pression du circuit auxiliaire est voisine de 10 MPa (100 bar);
- le limiteur de pression du circuit auxiliaire est un limiteur de pression à réglage manuel ;
- le distributeur auxiliaire est un distributeur à deux voies, commandé en tout ou rien.

L'invention sera mieux comprise grâce à la description qui va suivre donnée à titre d'exemple non limitatif en référence aux dessins annexés dans lesquels :
- La figure 1 représente une vue schématique de dessus, d'une machine selon l'invention en cours de travail.
- La figure 2 représente schématiquement et partiellement, un circuit hydraulique d'une machine selon l'invention.

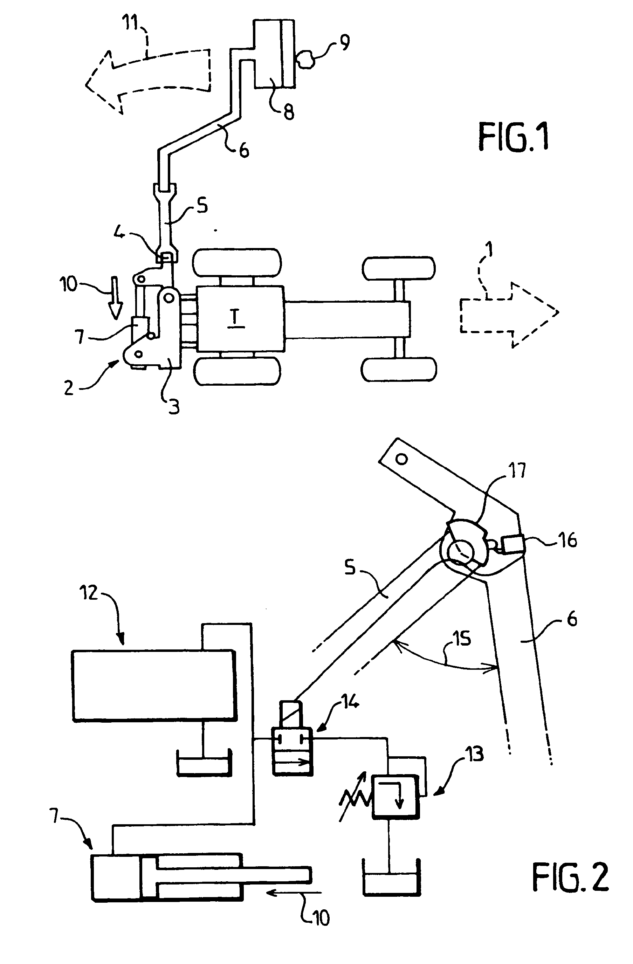

En référence aux figures 1 et 2, les éléments identiques ou fonctionnellement équivalents sont repérés par des chiffres de référence identique.

Sur la figure 1, une machine selon l'invention est attelée à l'arrière d'un tracteur T.

En cours de travail, le tracteur T circule dans le sens de la flèche 1 en tractant la machine 2 attelée à l'arrière du tracteur T.

La machine 2 comporte un bâti 3 supportant à rotation autour d'un axe horizontal 4 un ensemble de deux bras 5 et 6 formant un compas.

L'ensemble des bras 5 et 6 formant compas est orienté par un vérin d'orientation 7 qui pousse l'ensemble des bras 5 et 6 en avant en cours de travail.

Le vérin d'orientation 7 est commandé de manière connue en soi par un distributeur non représenté pouvant intégrer un limiteur de pression.

Ainsi, lorsque la tête 8 de travail portée par le deuxième bras rencontre un obstacle 9, la force exercée par cet obstacle 9 est retransmise au vérin 7 d'orientation dans le sens de la flèche 10, en augmentant la pression dans la grande chambre du vérin 7 d'orientation.

Lorsque la pression exercée par le fluide hydraulique contenu dans la grande chambre du vérin 7 d'orientation dépasse une valeur prédéterminée, le limiteur de pression éventuellement intégré dans le distributeur de commande devient actif, de sorte que le clapet de ce limiteur de pression s'ouvre pour permettre le retour du fluide hydraulique au réservoir.

Le retour du fluide hydraulique au réservoir entraîne alors la contraction du vérin 7 et l'escamotage vers l'arrière de l'ensemble de bras 5 et 6 dans le sens de la flèche 11.

Sur la figure 2, une machine selon l'invention comporte de manière connue en soi un vérin 7 d'orientation de l'ensemble de bras hydraulique 5 et 6, un distributeur hydraulique 12 intégrant un limiteur de pression taré à une pression prédéterminée, de manière connue en soi.

Selon l'invention, la machine comporte en outre un circuit auxiliaire de limitation de pression mis en service lorsque l'ensemble de bras 5 et 6 est replié en dessous d'un certain angle, de manière à escamoter les bras 5 et 6 vers l'arrière au contact d'un obstacle tel que l'obstacle 9 de la figure 1.

Le circuit auxiliaire de limitation de pression comporte un limiteur 13 de pression taré à une pression inférieure à la pression de tarage du limiteur de pression du distributeur 12 de commande du vérin 7 d'orientation.

Le circuit auxiliaire de limitation de pression comporte également un distributeur auxiliaire 14 commandé en fonction de l'ouverture angulaire 15 du compas formé par les bras 5 et 6.

Ce distributeur auxiliaire 14 est avantageusement un distributeur électromagnétique commandé par un moyen fixé aux bras 5 et 6.

De manière avantageuse, le circuit auxiliaire de limitation de pression peut comporter également un moyen de mise en service du distributeur auxiliaire 14.

Ce moyen de mise en service du distributeur auxiliaire 14 est fixé aux bras 5 et 6 : ce moyen de mise en service du distributeur auxiliaire 14 comporte avantageusement un contacteur électrique 16 ou poussoir formant interrupteur fixé à un des bras, par exemple au bras 6, et une came 17 fixée à l'autre bras, par exemple au bras 5.

Ainsi, lorsque la came 17 agit sur le poussoir 16 du contacteur électrique formant interrupteur, le distributeur auxiliaire 14 est activé dans le sens passant, de manière à mettre en service le limiteur de pression 13, dont la pression de tarage est inférieure à la pression de tarage du distributeur 12 de commande, par exemple voisine des deux tiers de la pression de tarage du distributeur de commande.

Des essais ont montré qu'une pression de tarage du limiteur 13 de pression voisine de 10 MPa (100 bar) permettait une protection efficace de l'ensemble de bras 5 et 6.

Avantageusement, le limiteur de pression 13 est un limiteur de pression à réglage manuel, ce qui permet son réglage en fonction de la nature des travaux à effectuer par la tête 8 de travail portée par l'ensemble de bras 5 et 6.

De manière avantageuse également, le distributeur auxiliaire 14 est un distributeur à deux voies commandé en tout ou rien par le contacteur électromagnétique 16 au contact de la came 17.

Ainsi, grâce à l'invention, lorsque le compas formé par les bras 5 et 6 est fermé en dessous d'une ouverture angulaire 15 inférieure par exemple à 40 degrés d'angle, la protection de l'ensemble de bras 5 et 6 est assurée par la mise en service du limiteur 13 de pression à réglage manuel.

L'invention décrite en référence à un mode de réalisation particulier n'y est nullement limitée, mais couvre au contraire toute modification de forme et toute variante de réalisation, dans le cadre et l'esprit de l'invention.

Ainsi, le contacteur 16 formant interrupteur peut être remplacé par un capteur d'ouverture de l'angle de bras relié à un automate réglant automatiquement la pression de tarage d'un limiteur 13 de pression à commande proportionnelle.

Dans le cas de cette variante de réglage automatique de la pression de tarage du limiteur 13 de pression, il est possible de se passer du distributeur auxiliaire 14.

De préférence également dans le cas de cette variante automatisée, la détermination de la pression de tarage du limiteur 13 de pression peut suivre une loi de fonctionnement déterminée en fonction, soit de l'ouverture angulaire 15 du compas, soit du déport de la tête de travail 8 par rapport à l'axe du tracteur T ou de la machine 2.

## Revendications

1. - Machine (2) du genre faucheuse-débroussailleuse, du type comportant un bâti (3) supportant à rotation autour d'un axe (4) horizontal un ensemble de bras (5-6) formant compas, ledit ensemble de bras (5-6) formant compas étant orienté par un vérin (7) d'orientation poussant l'ensemble de bras (5-6) vers l'avant en cours de travail, ledit vérin d'articulation (7) étant commandé par un distributeur (12) de commande intégrant un limiteur de pression, **caractérisée** en combinaison par le fait que la machine (2) comporte un circuit auxiliaire de limitation de pression mis en service lorsque l'ensemble de bras (5-6) est replié en dessous d'un certain angle, de manière à escamoter les bras (5-6) vers l'arrière au contact d'un obstacle (9), et par le fait que ledit circuit auxiliaire de limitation de pression comporte un limiteur (13) de pression taré à une pression inférieure à la pression de tarage du limiteur de pression du distributeur (12) de commande.

2. - Machine selon la revendication 1, **caractérisée par le fait que** ledit circuit auxiliaire de limitation de pression comporte un distributeur auxiliaire (14) commandé en fonction de l'ouverture angulaire du compas de l'ensemble (5-6) de bras.

3. - Machine selon la revendication 2, **caractérisée par le fait que** le distributeur auxiliaire (14) est un distributeur électromagnétique commandé par un moyen fixé à l'ensemble (5-6) de bras, pour mettre ou non en service le limiteur de pression (13) du circuit auxiliaire.

4. - Machine selon la revendication 3, **caractérisée par le fait que** le moyen fixé à l'ensemble de bras comporte un contacteur électrique (14) formant interrupteur.

5. - Machine selon la revendication 3, **caractérisée par le fait que** le moyen fixé à l'ensemble (5-6) de bras comporte une came (17) fixée à un premier bras (5) et un poussoir (16) fixé à un deuxième bras (6), dont la coopération assure la commande du distributeur auxiliaire (14).

6. - Machine selon la revendication 1, **caractérisée par le fait que** la pression de tarage du limiteur de pression (13) du circuit auxiliaire est voisine des deux tiers de la pression de tarage du distributeur de commande.

7. - Machine selon la revendication 6, **caractérisée par le fait que** la pression de tarage du limiteur (13) de pression du circuit auxiliaire est voisine de 10 MPa (100 bar).

8. - Machine selon la revendication 1 ou la revendication 6, **caractérisée par le fait que** le limiteur (13) de pression du circuit auxiliaire est un limiteur de pression à réglage manuel.

9. - Machine selon la revendication 2, **caractérisée par le fait que** le distributeur auxiliaire (14) est un distributeur à deux voies, commandé en tout ou rien.

## Claims

1. A machine (2) of the flail mower type, of the type comprising a frame (3) supporting a set of arms (5-6) forming a compass joint so that they rotate about a horizontal axis (4), said set of arms (5-6) forming a compass joint being steered by a steering cylinder (7) which pushes the set of arms (5-6) forwards during working, said stick cylinder (7) being controlled by a control distributor (12) which includes a pressure limiter, **characterised in** combination by the fact that the machine (2) comprises an auxiliary pressure-limiting circuit which is activated when the set of arms (5-6) is bent below a certain angle, so as to retract the arms (5-6) towards the rear upon contact with an obstacle (9), and by the fact that said auxiliary pressure-limiting circuit comprises a pressure limiter (13) set to a pressure lower than the set pressure of the pressure limiter of the control distributor (12).

2. A machine according to Claim 1, **characterised by** the fact that said auxiliary pressure-limiting circuit comprises an auxiliary distributor (14) controlled according to the angular opening of the compass joint of the set of arms (5-6).

3. A machine according to Claim 2, **characterised by** the fact that the auxiliary distributor (14) is an electromagnetic distributor controlled by a means fastened to the set of arms (5-6), in order to activate or not to activate the pressure limiter (13) of the auxiliary circuit.

4. A machine according to Claim 3, **characterised by** the fact that the means fastened to the set of arms comprises an electric contactor (14) forming a switch.

5. A machine according to Claim 3, **characterised by** the fact that the means fastened to the set of arms (5-6) comprises a cam (17) fastened to a first arm (5) and a tappet (16) fastened to a second arm (6), the cooperation of which controls the auxiliary distributor (14).

6. A machine according to Claim 1, **characterised by** the fact that the set pressure of the pressure limiter (13) of the auxiliary circuit is close to two-thirds of the set pressure of the control distributor.

7. A machine according to Claim 6, **characterised by** the fact that the set pressure of the pressure limiter (13) of the auxiliary circuit is close to 10 MPa (100 bar).

8. A machine according to Claim 1 or Claim 6, **characterised by** the fact that the pressure limiter (13) of the auxiliary circuit is a manually-controlled pressure limiter.

9. A machine according to Claim 2, **characterised by** the fact that the auxiliary distributor (14) is a two-way distributor, under all or nothing control.

## Patentansprüche

1. Maschine (2) zum Grasmähen/Ausreißen von Gestrüpp, der Art mit einem Gestell, das eine einen Zirkel bildende Anordnung von Armen (5-6) um eine horizontale Achse (4) verdrehbar lagert, wobei die einen Zirkel bildende Anordnung von Armen (5-6) durch einen Ausrichtzylinder (7) ausgerichtet wird, der die Anordnung (5-6) im Ablauf der Arbeit vorschiebt, wobei dieser Gelenkzylinder (7) von einem Steuerverteiler (12) mit integriertem Druckbegrenzer gesteuert wird, in Kombination **dadurch gekennzeichnet, daß** die Maschine (2) einen Hilfsstromkreis zur Druckbegrenzung umfaßt, der eingeschaltet wird, wenn die Anordnung von Armen (5-6) um einem bestimmten Winkel heruntergeklappt wird, um die Arme (5-6) beim Kontakt mit einem Hindernis (9) nach hinten einzuziehen, und **dadurch**, daß der Hilfsstromkreis zur Druckbegrenzung einen Druckbegrenzer (13) umfaßt, der auf einen Druck geeicht ist, welcher niedriger als der Eichdruck des Druckbegrenzers des Steuerverteilers (12) ist.

2. Maschine nach Anspruch 1, **dadurch gekennzeichnet, daß** der Hilfsstromkreis zur Druckbegrenzung einen Hilfsverteiler (14) umfaßt, der in Abhängigkeit von der Winkelöffnung des Zirkels der Anordnung von Armen (5-6) gesteuert wird.

3. Maschine nach Anspruch 2, **dadurch gekennzeichnet, daß** der Hilfsverteiler (14) ein elektromagnetischer Verteiler ist, der von einer an der Anordnung von Armen (5-6) befestigten Einrichtung gesteuert wird, um den Druckbegrenzer (13) des Hilfsstromkreises ein- oder auszuschalten.

4. Maschine nach Anspruch 3, **dadurch gekennzeichnet, daß** die an der Anordnung von Armen befestigte Einrichtung ein elektrisches Schütz (14) umfaßt, das einen Ausschalter bildet.

5. Maschine nach Anspruch 3, **dadurch gekennzeichnet, daß** die an der Anordnung von Armen (5-6) befestigte Einrichtung einen an einem ersten Arm (5) befestigten Nocken (17) und einen an einem zweiten Arm (6) befestigten Stößel (16) umfaßt, deren Zusammenwirken die Steuerung des Hilfsverteilers (14) sicherstellt.

6. Maschine nach Anspruch 1, **dadurch gekennzeichnet, daß** der Eichdruck des Druckbegrenzers (13) des Hilfsstromkreises nahezu zwei Drittel des Eichdrucks des Steuerverteilers beträgt.

7. Maschine nach Anspruch 6, **dadurch gekennzeichnet, daß** der Eichdruck des Druckbegrenzers (13) des Hilfsstromkreises nahe 10 Mpa (100 bar) liegt.

8. Maschine nach Anspruch 1 oder Anspruch 6, **dadurch gekennzeichnet, daß** der Druckbegrenzer (13) des Hilfsstromkreises ein von Hand einstellbarer Druckbegrenzer ist.

9. Maschine nach Anspruch 2, **dadurch gekennzeichnet, daß** der Hilfsverteiler (14) ein Zweiwegeverteiler ist, der im Alles-oder-Nichts-Betrieb gesteuert wird.
